# EUROPEAN PATENT SPECIFICATION

(11) **EP 2 894 792 B1**
(45) Date of publication and mention of the grant of the patent: **30.11.2016**
(21) Application number: 15150638.3
(22) Date of filing: 09.01.2015
(51) Int. Cl.: H04B 1/00, H04B 1/04

(54) **Wireless communication module**
Drahtloses Kommunikationsmodul
Module de communication sans fil

(30) Priority: 14.01.2014 JP 2014004221
(43) Date of publication of application: 15.07.2015
(73) Proprietor: Alps Electric Co., Ltd., Tokyo 145-8501 (JP)
(72) Inventor: Sugawara, Jun, Tokyo, 145-8501 (JP); Takeda, Shuichi, Tokyo, 145-8501 (JP); Kofune, Kazushi, Tokyo, 145-85001 (JP)
(74) Representative: Klunker . Schmitt-Nilson . Hirsch

(56) References cited:
- JP-A- 2005 198 077
- US-A1- 2003 207 668
- US-A1- 2010 195 547
- US-B1- 6 496 708

## Description

The present invention relates to a wireless communication module, and more particularly to a wireless communication module used as part of a vehicle-mounted wireless communication unit.

A vehicle-mounted wireless communication unit includes a communication module, on a main body side, that is mounted in a vehicle and also includes a wireless communication module equipped with an antenna used for transmission and reception, the wireless communication module being connected to the communication module on the main body side through a radio frequency cable intended for signal transmission. The vehicle-mounted wireless communication unit related to the present invention is a communication unit that transmits and receives signal at several GHz such as the 2.4 GHz band in, for example, a communication unit on a wireless local area network (LAN) or a unit conforming to Bluetooth (registered trademark).

A wireless communication module on the antenna side of a vehicle-mounted wireless communication unit used for transmission and reception incorporates a transmission circuit and a reception circuit and also has a selector switch that makes a switchover between the transmission circuit and the reception circuit. Conventionally, besides - 1 - the above-mentioned radio frequency cable for signal transmission, a control cable has been provided in the vehicle to control the selector switch. The communication module on the main body side has sent control signals through the control cable.

However, the wireless communication module on the antenna side is disposed at a distance from the communication module on the main body side, so the cable connected between the wireless communication module on the antenna side and the communication module on the main body side has been more than several meters long, increasing the manufacturing cost. Therefore, there has been a desire to control the selector switch without having to add a control cable.

JP 2005-198077 A discloses a technology that enables a switchover between a transmission circuit and a reception circuit without having to add a control cable. Fig. 8 illustrates the structure of a wireless communication apparatus disclosed in JP 2005-198077 A.

A wireless communication apparatus 900 uses a wireless LAN modem 901 (time division duplex (TDD) modem) conforming to a TDD method to perform relay transfer to and from a wireless communication apparatus at a distant party with radio signals. In this relay transfer, the wireless communication apparatus 900 divides a communication signal to be transmitted and a communication signal to be received at fixed time intervals and alternately performs transmission and reception. The wireless communication apparatus 900 includes: a frequency converter 920, in which a transmission frequency converting means 921, which is a transmission circuit, and a reception frequency converting means 922, which is a reception circuit, are incorporated; a transmission antenna 931 that wirelessly transmits output signals; a reception antenna 932 that receives radio signals from the distant party; and a wireless LAN modem 901. Between the wireless LAN modem 901 and the frequency converter 920, the wireless communication apparatus 900 further includes a transmission signal branching circuit 911, a transmission signal detector 912, and a path selector switch 913.

In the wireless communication apparatus 900, the transmission signal detector 912 detects signal intensity on a signal path connected to the wireless LAN modem 901, and according to the detected signal intensity, the path selector switch 913 switches the signal path connected to the wireless LAN modem 901 to one of the transmission frequency converting means 921 and reception frequency converting means 922 in synchronization with TDD communication.

When, in this structure, it is detected, from the signal intensity on the signal path, that the wireless LAN modem 901 is transmitting a signal, that is, when the signal intensity is at least a predetermined intensity setting, the path selector switch 913 is switched to the transmission side (transmission frequency converting means 921). In another case, the path selector switch 913 can be switched to the reception side (reception frequency converting means 922). As a result, it is possible to switch the signal path in synchronization with a timing at which TDD communication is switched between transmission and reception without having to send, from the wireless LAN modem 901, a control signal used to switch the signal path in synchronization with TDD communication.

Based on that the electric power of a transmission signal during transmission is larger than the electric power of a reception signal during reception, the wireless communication apparatus 900 can switch the path in synchronization with a timing at which TDD communication is switched between transmission and reception

Recently, however, so-called dual band wireless LAN communication units, which can selectively use the 2.4-GHz band and 5-GHz band as the signal frequency band to handle, are beginning to be used.

There is also a desire for dual band vehicle-mounted wireless communication units that can use both the 2.4-GHz band and 5-GHz band. A wireless communication module on the antenna side of a dual band vehicle-mounted wireless communication unit needs to switch the band of a transmission circuit to the 2.4-GHz band or 5-GHz band. In this case as well, it is desired to switch to the 2.4-GHz band or 5-GHz band without having to send, from a communication module in the main body, a control signal used for band switching.

In dual band wireless communication units, however, transmission signals in the 2.4-GHz band or 5-GHz band are managed so that signal electric power of these signals becomes substantially constant regardless of their frequencies. If the structure used in the wireless communication apparatus 900 is used without alteration, therefore, it is impossible to make a switchover to the 2.4-GHz band or 5-GHz band according to the magnitude of the signal electric power.

The present invention addresses the problem with the above actual situation of the related art by providing a dual band wireless communication module that can make a switchover between two different bands with a simple structure without having to send, from a communication module in the main body, a control signal used for band switching.

The present invention is directed to a wireless communication module according to the features of claim 1. Embodiments are disclosed in the dependent claims.

To address this problem, the wireless communication module according to an aspect of the present invention is a wireless communication module that is connected to a main-body communication module through a signal transfer cable. The wireless communication module includes: a radio-frequency terminal to which the signal transfer cable is connected, a transmission signal being entered to the radio-frequency terminal; a directional coupling circuit, the input port of which is connected to the radio-frequency terminal; a first switch circuit that has a common terminal, a first connection terminal, and a second connection terminal, the common terminal being connected to the output port of a signal transfer path in the directional coupling circuit; a first transmission circuit connected to the first connection terminal; a second transmission circuit connected to the second connection terminal; and a power detecting circuit connected to the coupling output port of the directional coupling circuit. The first transmission circuit is structured so as to transmit signals in a prescribed first frequency band, and the second transmission circuit is structured so as to transmit signals in a second frequency band, which differs from the first frequency band. The magnitude of the electric power of the transmission signal at the input port of the directional coupling circuit is constant regardless of the frequency of the transmission signal, and a difference is made in the amount of electric power attenuation in the path from the input port of the directional coupling circuit to the input port of the power detecting circuit between the first frequency band and the second frequency band. The first switch circuit is switched to the first connection terminal or second connection terminal according to the magnitude of electric power detected by the power detecting circuit.

With the wireless communication module structured as described above, a difference is made in the amount of electric power attenuation in the path from the input port of the directional coupling circuit to the input port of the power detecting circuit between the first frequency band and the second frequency band so that the first switch circuit is switched to the same side as the first transmission circuit or the same side as the second transmission circuit according to the magnitude of electric power detected by the power detecting circuit. This eliminates the need to transmit, from the main-body communication module, a control signal used for band switching, so a switchover can be made between two different frequency bands with a simple structure.

In the wireless communication module, structured as described above, according to an embodiment of the present invention, the power detecting circuit is structured so as to output a voltage equivalent to the magnitude of the detected electric power; a voltage comparison circuit is connected between the power detecting circuit and the control signal input port of the first switch circuit, a first threshold voltage equivalent to prescribed first electric power being set in the voltage comparison circuit. When a voltage output from the power detecting circuit is lower than the first threshold voltage, the first switch circuit is switched to its first connection terminal. When the voltage output from the power detecting circuit is equal to or higher than the first threshold voltage, the first switch circuit is switched to its second connection terminal.

With the wireless communication module structured as described above, since the first switch circuit is switched by using the power detecting circuit structured so as to output a voltage equivalent to the magnitude of detected electric power and the voltage comparison circuit in which the first threshold voltage equivalent to the prescribed first electric power is set, a switchover can be easily made between two different bands.

In the wireless communication module, structured as described above, according to an embodiment of the present invention, a filter is connected between the coupling output port of the directional coupling circuit and the input port of the power detecting circuit, the characteristics of the filter being used to make a difference in the amount of electric power attenuation between the first frequency band and the second frequency band.

Since the wireless communication module structured as described above uses the characteristics of the filter by which a difference is made between the amount of electric power attenuation in the first frequency band and the amount of electric power attenuation in the second frequency band, it is possible to easily implement a structure that makes a difference in the amount of electric power attenuation and thereby to suppress an increase in costs to a small value.

The wireless communication module, structured as described above, according to an embodiment of the present invention includes a first reception circuit that receives signals in the first frequency band, a second reception circuit that receives signals in the second frequency band, and a coupler having two input ports; the output port of the first reception circuit and the output port of the second reception circuit are connected to the two input ports of the coupler; the first switch circuit has a third connection terminal, the third connection terminal being connected to the output port of the coupler; the first switch circuit is switched to the first connection terminal, second connection terminal, or third connection terminal according to the magnitude of electric power detected by the power detecting circuit

With the wireless communication module structured as described above, in a case as well in which the first reception circuit and second reception circuit are provided, the first switch circuit is switched to the same side as the first transmission circuit or the same side as the second transmission circuit according to the magnitude of electric power detected by the power detecting circuit. Furthermore, a switchover between transmission and reception is also made according to the magnitude of electric power detected by the power detecting circuit. Therefore, these two types of switching can be carried out by only the first switch circuit.

In the wireless communication module, structured as described above, according to an embodiment of the present invention, the power detecting circuit is structured so as to output a voltage equivalent to the magnitude of the detected electric power; a voltage comparison circuit is connected between the power detecting circuit and the control signal input port of the first switch circuit; a first threshold voltage equivalent to prescribed first electric power and a second threshold voltage equivalent to prescribed second electric power are set in the voltage comparison circuit, the second threshold voltage being lower than the first threshold voltage. When a voltage output from the power detecting circuit is lower than the first threshold voltage but equal to or higher than the second threshold voltage, the first switch circuit is switched to the first connection terminal. When the voltage output from the power detecting circuit is equal to or higher than the first threshold voltage, the first switch circuit is switched to the second connection terminal. When the voltage output from the power detecting circuit is lower than the second threshold voltage, the first switch circuit is switched to the third connection terminal.

With the wireless communication module structured as described above, since two threshold voltages, first threshold voltage and second threshold voltage, are used to switch the first switch circuit, it is possible to easily make a switchover between two different frequency bands during transmission and a switchover between transmission and reception.

The wireless communication module, structured as described above, according to an embodiment of the present invention also includes an antenna and a second switch circuit that has an antenna-use first connection terminal, an antenna-use second connection terminal, and an antenna-use common terminal connected to the antenna. The antenna-use first connection terminal and antenna-use second connection terminal are respectively connected to the output port of the first transmission circuit and the output port of the second transmission circuit. Therefore, a switchover to the antenna-use first connection terminal and antenna-use second connection terminal is respectively made in synchronization with a switchover to the first connection terminal and second connection terminal of the first switch circuit.

With the wireless communication module structured as described above, since a switchover to the antenna-use first connection terminal and antenna-use second connection terminal of the second switch circuit is respectively made in synchronization with a switchover to the first connection terminal and second connection terminal of the first switch circuit, a switchover can be reliably made between the first transmission circuit and the second transmission circuit at their input ports and output ports.

In the wireless communication module, structured as described above, according to an embodiment of the present invention, the first frequency band is a frequency band around 2.4 GHz and the second frequency band is a frequency band around 5 GHz.

Since the first frequency band is a frequency band around 2.4 GHz and the second frequency band is a frequency band around 5 GHz, the wireless communication module structured as described above can be applied to a wireless LAN communication unit.

With the wireless communication module in the present invention, a difference is made in the amount of electric power attenuation in the path from the input port of the directional coupling circuit to the input port of the power detecting circuit between the first frequency band and the second frequency band so that the first switch circuit is switched to the same side as the first transmission circuit or the same side as the second transmission circuit according to the magnitude of electric power detected by the power detecting circuit. This eliminates the need to transmit, from the main-body communication module, a control signal used for band switching, enabling a switchover to be made between two different frequency bands with a simple structure.

### BRIEF DESCRIPTION OF THE DRAWINGS

Fig. 1 is a block diagram illustrating the structure of a wireless communication module according to a first embodiment;
Fig. 2 is a frequency characteristic diagram of a coupling path in a directional coupling circuit;
Fig. 3 is a block diagram illustrating a structure in a variation of the first embodiment;
Fig. 4 is a frequency characteristic diagram of a coupling path in a directional coupling circuit in the variation;
Fig. 5 is a frequency characteristic diagram of a filter used in the variation.
Fig. 6 is a block diagram illustrating the structure of a wireless communication module according to a second embodiment;
Fig. 7 is a frequency characteristic diagram of a coupling path in a directional coupling circuit; and

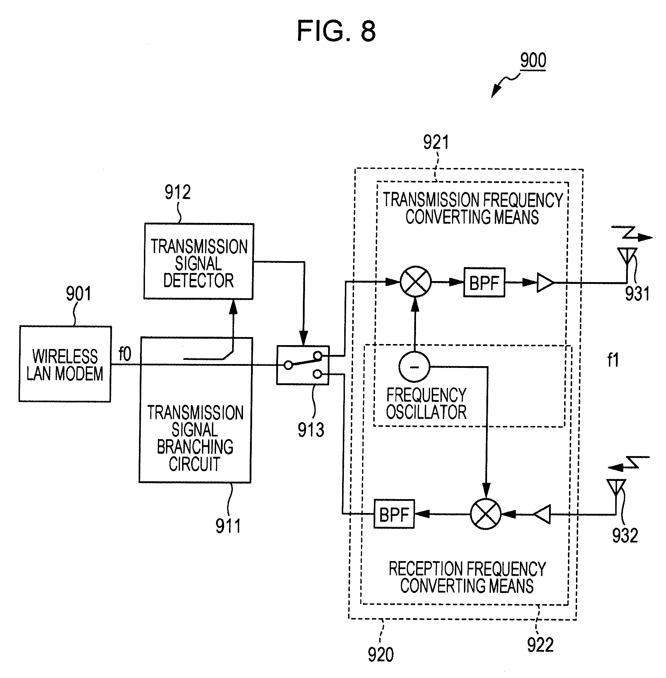

Fig. 8 is a block diagram of a wireless communication module in a conventional example.

### DESCRIPTION OF EMBODIMENTS

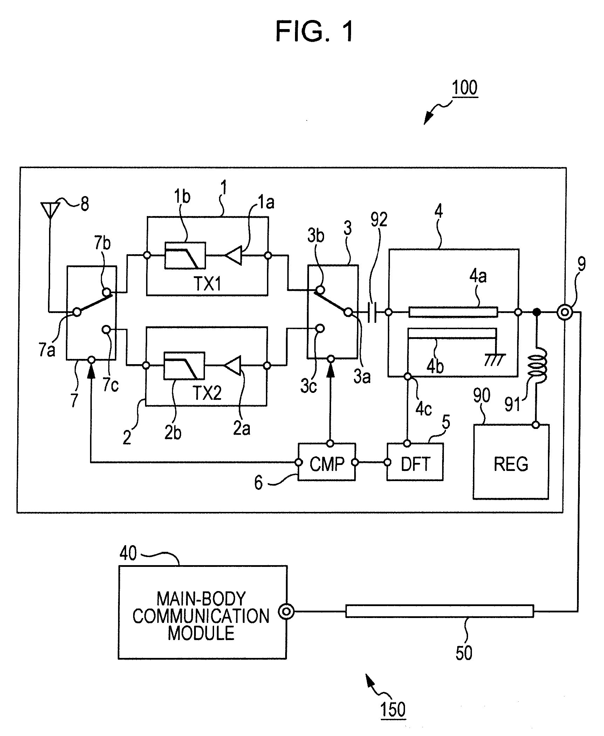

A wireless communication module according to embodiments of the present invention will be described below with reference to Figs. 1 to 7.

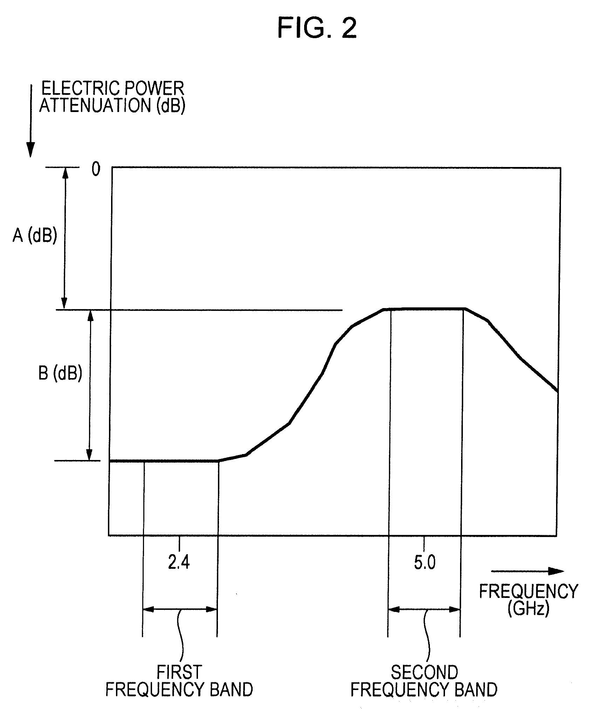

A wireless communication module 100 according to a first embodiment of the present invention will be described first with reference to Figs. 1 and 2.

Fig. 1 is a block diagram illustrating the structure of the wireless communication module 100, and Fig. 2 is a frequency characteristic diagram of a coupling path in a directional coupling circuit 4 used in the wireless communication module 100.

As illustrated in Fig. 1, a vehicle-mounted wireless communication unit 150 includes a main-body communication module 40 mounted in, for example, the console box of a vehicle, the wireless communication module 100, and a signal transfer cable 50 that mutually connects the main-body communication module 40 and wireless communication module 100. The vehicle-mounted wireless communication unit 150 is a dual band wireless LAN communication unit that transmits and receives signals in the 2.4-GHz band and 5-GHz band. The wireless communication module 100 is formed as part of the vehicle-mounted wireless communication unit 150. The wireless communication module 100 is disposed on the roof of the vehicle, on a wing mirror, or at another position distant from the main-body communication module 40. A reception circuit in another communication module (not illustrated) is used for reception at the wireless communication unit 150. If the wireless communication unit has only a transmission function, its structure may be only the structure illustrated in Fig. 1.

As illustrated in Fig. 1, the wireless communication module 100 includes a first transmission circuit 1, a second transmission circuit 2, a first switch circuit 3, the directional coupling circuit 4, a power detecting circuit 5, a voltage comparison circuit 6, a second switch circuit 7, an antenna 8, a radio-frequency terminal 9, and a power supply voltage regulator 90.

The power supply voltage regulator 90 is connected to the radio-frequency terminal 9 through an inductor 91. A power supply voltage is supplied from the main-body communication module 40 to the wireless communication module 100 together with a transmission signal through the core of the signal transfer cable 50. The inductor 91, which intervenes between the power supply voltage regulator 90 and the radio-frequency terminal 9, prevents a transmission signal, which is a radio-frequency signal, from entering the power supply voltage regulator 90. The power supply voltage regulator 90 stabilizes the power supply voltage from the main-body communication module 40 to a prescribed voltage and then supplies it to the circuits in the wireless communication module 100.

The input port of the directional coupling circuit 4 is connected to the radio-frequency terminal 9. A transmission signal from the main-body communication module 40 is entered to the directional coupling circuit 4. The magnitude of the electric power of a transmission signal at the input port of the directional coupling circuit 4 is constant regardless of the frequency of the transmission signal. In the directional coupling circuit 4, a signal eligible for being transferred is transferred through a signal transfer path 4a and is combined in a coupling path 4b to attenuate the signal by a prescribed amount of electric power, after which the attenuated signal can be retrieved from a coupling output port 4c. When the electric power of the transmission signal retrieved from the coupling output port 4c is measured, therefore, the magnitude of the electric power entered to the directional coupling circuit 4 can be known. Since the power detecting circuit 5 is connected to the coupling output port 4c of the directional coupling circuit 4, the electric power of the transmission signal can be measured.

To explain the wireless communication module 100 in the present invention, in which a transmission circuit is mounted, an end of the directional coupling circuit 4 on the same side as the radio-frequency terminal 9 has been an input port and an end of the signal transfer path 4a in the directional coupling circuit 4 on the same side as the first switch circuit 3 has been an output port; this is true in a case as well in which reception circuits, which will be described later, are mounted in the same module in which the transmission circuits are mounted. The characteristics of the amount of electric power attenuation in a path from the input port of the directional coupling circuit 4 in the wireless communication module 100 to the coupling output port 4c and the characteristics of the amount of electric power attenuation in a path from the output port of the signal transfer path 4a in the directional coupling circuit 4 to the coupling output port 4c are the same. This is also true for a wireless communication module 200 and a wireless communication module 300, which will be described later.

The first switch circuit 3 has a common terminal 3a, a first connection terminal 3b, and a second connection terminal 3c. The second switch circuit 7 has an antenna-use common terminal 7a, an antenna-use first connection terminal 7b, and an antenna-use second connection terminal 7c. The common terminal 3a of the first switch circuit 3 is connected to the output port of the signal transfer path 4a in the directional coupling circuit 4. A capacitor 92 is connected between the common terminal 3a and the signal transfer path 4a; the capacitor 92 prevents a power supply voltage entered from the main-body communication module 40 to the radio-frequency terminal 9 from being applied to the common terminal 3a of the first switch circuit 3. The input port of the first transmission circuit 1 is connected to the first connection terminal 3b of the first switch circuit 3. The input port of the second transmission circuit 2 is connected to the second connection terminal 3c of the first switch circuit 3. As described above, the wireless communication module 100 includes the antenna 8; the antenna-use common terminal 7a of the second switch circuit 7 is connected to the antenna 8. The antenna-use first connection terminal 7b and antenna-use second connection terminal 7c of the second switch circuit 7 are respectively connected to the output port of the first transmission circuit 1 and the output port of the second transmission circuit 2. In the wireless communication module 100, the antenna 8 operates an antenna for transmission.

The first transmission circuit 1 is structured so as to transmit signals in a prescribed first frequency band, and the second transmission circuit 2 is structured so as to transmit signals in a prescribed second frequency band, which differs from the first frequency band. The first frequency band of the wireless communication module 100 is a frequency band around 2.4 GHz, and its second frequency band is a frequency band around 5 GHz. In the first transmission circuit 1, a first power amplifier 1a and a first low-pass filter 1b are connected in series between the input port and output port of the first transmission circuit 1. Similarly, in the second transmission circuit 2, a second power amplifier 2a and a second low-pass filter 2b are connected in series between the input port and output port of the second transmission circuit 2.

The first power amplifier 1a and second power amplifier 2a each amplify an entered transmission signal to prescribed transmission electric power and output the amplified signal. The first low-pass filter 1b and second low-pass filter 2b are provided to suppress unnecessary signals such as, for example, a harmonic component included in a transmission signal to be output. The first low-pass filter 1b and second low-pass filter 2b each may be a band-pass filter.

The input port of the voltage comparison circuit 6 is connected to the output port of the power detecting circuit 5, which is connected to the coupling output port 4c. A control signal output port of the voltage comparison circuit 6 is connected to the control signal input port of the first switch circuit 3, and another control signal output port of the voltage comparison circuit 6 is connected to the control signal input port of the second switch circuit 7. The power detecting circuit 5 is structured so as to output a voltage equivalent to the magnitude of detected electric power. The voltage comparison circuit 6 receives an output voltage from the power detecting circuit 5, compares the output voltage with a prescribed voltage value, which is a threshold, and outputs a control signal according to the comparison result. Therefore, the main-body communication module 40 does not need to transfer a control signal used to switch the first switch circuit 3. Specifically, a cable that would otherwise be used for this switchover does not need to be added between the main-body communication module 40 and the control signal input port of the first switch circuit 3.

The same control signal is entered to the control signal input port of the first switch circuit 3 and the control signal input port of the second switch circuit 7 at the same time. Therefore, a switchover to the antenna-use first connection terminal 7b and antenna-use second connection terminal 7c of the second switch circuit 7 is respectively made in synchronization with a switchover to the first connection terminal 3b and second connection terminal 3c of the first switch circuit 3.

As described above, the directional coupling circuit 4 transfers a signal eligible for being transferred through the signal transfer path 4a and combines the signal in the coupling path 4b to attenuate the signal by a prescribed amount of electric power, after which the attenuated signal can be retrieved from the coupling output port 4c. Usually, the amount of electric power attenuated in a path from the input port or output port of the directional coupling circuit 4 to the coupling output port 4c is constant regardless of the frequency. With the wireless communication module 100, however, a difference is made in the amount of electric power attenuation in the path from the input port of the directional coupling circuit 4 to the input port of the power detecting circuit 5 between the first frequency band and the second frequency band. That is, the directional coupling circuit 4 attenuates different amounts of electric power between around the 2.4 GHz and around the 5 GHz.

Fig. 2 illustrates the frequency characteristics of electric power attenuation in a path from the input port or output port of the directional coupling circuit 4 used in the wireless communication module 100 to the coupling output port 4c. The drawing indicates that in the directional coupling circuit 4, the amount of electric power attenuation in the second frequency band, that is, around 5 GHz, is A (dB). The amount of electric power attenuation in the first frequency band, that is, around 2.4 GHz, in the path from the input port or output port to the coupling output port 4c is set so as to be B (dB) larger than the amount of electric power attenuation around 5 GHz. As described above, the magnitude of the electric power of a transmission signal at the input port of the directional coupling circuit 4 is constant regardless of the frequency of the transmission signal. At the coupling output port 4c, therefore, a difference of B (dB) occurs in the magnitude of electric power between a transmission signal at 2.4 GHz and a transmission signal at 5 GHz. When the magnitude of the electric power of a transmission signal at the coupling output port 4c is measured, therefore, it is possible to determine whether the frequency of the transmission signal entered to the input port of the directional coupling circuit 4 is 2.4 GHz or 5 GHz.

As described above, the power detecting circuit 5 is structured so as to output a voltage equivalent to the magnitude of detected electric power, and the voltage comparison circuit 6 receives an output voltage from the power detecting circuit 5, compares the output voltage with a prescribed voltage value, which is a threshold, and outputs a control signal according to the comparison result. Here, a first threshold voltage V1 equivalent to prescribed first electric power P1 (dBm) is set in the voltage comparison circuit 6. As a result, when the voltage output from the power detecting circuit 5 is lower than the first threshold voltage V1, the first switch circuit 3 is switched to the first connection terminal 3b, that is, to the same side as the first transmission circuit 1. When the voltage output from the power detecting circuit 5 is equal to or higher than the first threshold voltage V1, the first switch circuit 3 is switched to the second connection terminal 3c, that is, to the same side as the second transmission circuit 2.

Specifically, the magnitude of the electric power of a transmission signal at the input port of the directional coupling circuit 4 is set to P0 (dBm), the magnitude being constant regardless of the frequency of the transmission signal. The amount of electric power attenuation around 5 GHz in the directional coupling circuit 4 is set to A (dB), and the amount of electric power attenuation around 2.4 GHz is set so as to be B (dB) larger than the amount of electric power attenuation around 5 GHz, as described above. Thus, the prescribed first electric power P1 (dBm) is set to (P0 - A - B/2), which is an intermediate value between electric power at 5 GHz and electric power at 2.4 GHz, in the voltage comparison circuit 6. That is, P1 equals (P0 - A - B/2). Accordingly, it suffices to set the first threshold voltage V1 to a voltage equivalent to the first electric power P1 (= (P0 - A - B/2)). Then, if B is set to, for example, 10 (dB), it is possible to easily determine whether the frequency of the transmission signal is 2.4 GHz or 5 GHz.

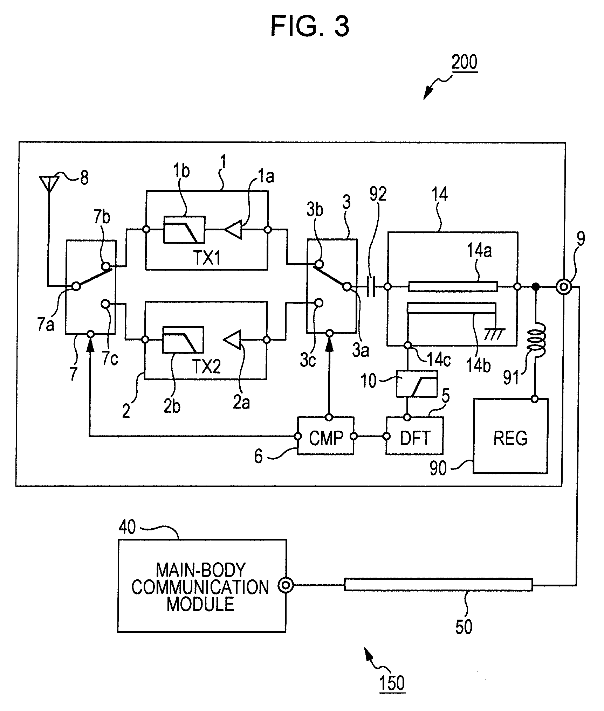

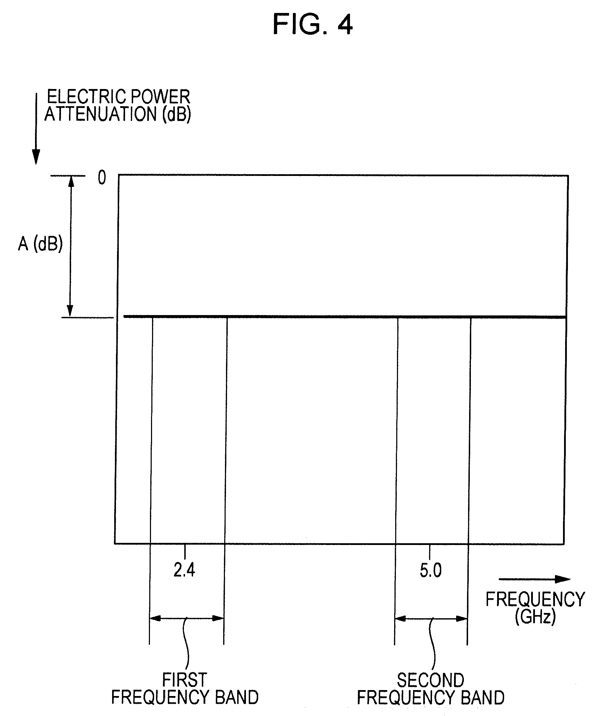

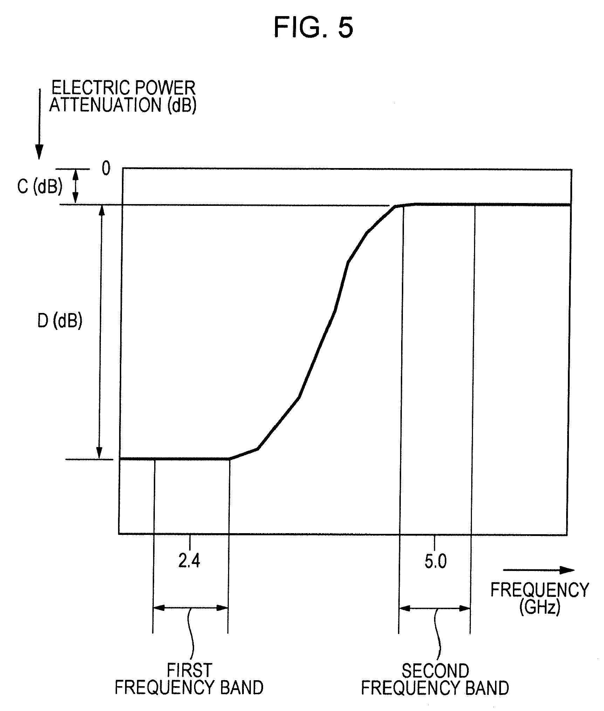

Next, a variation of the first embodiment will be described with reference to Figs. 3 to 5. Fig. 3 is a block diagram illustrating the structure of a wireless communication module 200 in the variation of the first embodiment. Fig. 4 is a frequency characteristic diagram of a coupling path 14b in a directional coupling circuit 14 used in the wireless communication module 200 in the variation. Fig. 5 is a frequency characteristic diagram of a filter 10 used in the wireless communication module 200 in the variation. The wireless communication module 200 differs from the wireless communication module 100 only in that the directional coupling circuit 14 is used in the wireless communication module 200 instead of the directional coupling circuit 4 that has been used in the wireless communication module 100 and the filter 10 is added; other structures in the wireless communication module 200 are the same as in the wireless communication module 100. Therefore, explanation of the other structures will be omitted.

The frequency characteristics of the coupling path 14b in the directional coupling circuit 14 illustrated in Fig. 3 are flat regardless of the frequency, as illustrated in Fig. 4. Therefore, there is no difference in the amount of electric power attenuation between 2.4 GHz and 5 GHz. In the wireless communication module 200, the filter 10 is connected between the coupling output port 14c of the directional coupling circuit 14 and the input port of the power detecting circuit 5. The filter 10 is, for example, a high-pass filter that offers a passage area around 5 GHz and also offers an attenuation area around 2.4 GHz, as illustrated in Fig. 5. The filter 10 generates an insertion loss of C (dB) at 5 GHz and causes an attenuation of D (dB) at 2.4 GHz with respect to the passage area. The filter 10 is not limited to a high-pass filter; the filter 10 may be a band-pass filter.

As described above, the magnitude of the electric power of a transmission signal at the input port of the directional coupling circuit 14 is constant regardless of the frequency of the transmission signal. At the input port of the power detecting circuit 5, therefore, there is a difference of D (dB) in the magnitude of the electric power between a transmission signal at 2.4 GHz and a transmission signal at 5 GHz. When the magnitude of the electric power of a transmission signal at the input port of the power detecting circuit 5 is measured, therefore, it is possible to determine whether the frequency of the transmission signal entered to the input port of the directional coupling circuit 4 is 2.4 GHz or 5 GHz.

As described above, the power detecting circuit 5 is structured so as to output a voltage equivalent to the magnitude of detected electric power, and the voltage comparison circuit 6 receives an output voltage from the power detecting circuit 5, compares the output voltage with a prescribed voltage value, which is a threshold, and outputs a control signal according to the comparison result. Here, a first threshold voltage V1' equivalent to prescribed first electric power P1' (dBm) is set in the voltage comparison circuit 6. As a result, when the voltage output from the power detecting circuit 5 is lower than the first threshold voltage V1', the first switch circuit 3 is switched to the first connection terminal 3b, that is, to the same side as the first transmission circuit 1. When the voltage output from the power detecting circuit 5 is equal to or higher than the first threshold voltage V1', the first switch circuit 3 is switched to the second connection terminal 3c, that is, to the same side as the second transmission circuit 2.

Specifically, the magnitude of the electric power of a transmission signal at the input port of the directional coupling circuit 4 is set to P0 (dBm), the magnitude being constant regardless of the frequency of the transmission signal. As described above, the amount of electric power attenuation around 5 GHz and 2.4 GHz in the directional coupling circuit 4 is A (dB), the insertion loss in the filter 10 is C (dB), and the amount of electric power attenuation around 2.4 GHz is D (dB) larger than the amount of electric power attenuation around 5 GHz. Thus, the prescribed first electric power P1' (dBm) is set to (P0 - A - C - D/2), which is an intermediate value between electric power at 5 GHz and electric power at 2.4 GHz, in the voltage comparison circuit 6. That is, P1' equals (P0 - A - C - D/2). Accordingly, it suffices to set the first threshold voltage V1' to a voltage equivalent to the first electric power P1' (= (P0 - A - C - D/2) ).

As described above, with the wireless communication module 100 in the present invention, a difference is made in the amount of electric power attenuation in the path from the input port of the directional coupling circuit 4 to the input port of the power detecting circuit 5 between the first frequency band and the second frequency band so that the first switch circuit 3 is switched to the same side as the first transmission circuit 1 or the same side as the second transmission circuit 2 according to the magnitude of electric power detected by the power detecting circuit 5. This eliminates the need to transmit, from the main-body communication module 40, a control signal used for band switching, enabling a switchover to be made between two different frequency bands with a simple structure. Specifically, a cable that would otherwise be used for this switchover does not need to be added.

Since the first switch circuit 3 is switched by using the power detecting circuit 5 structured so as to output a voltage equivalent to the magnitude of detected electric power and the voltage comparison circuit 6, in which the first threshold voltage V1 equivalent to the prescribed first electric power P1 is set, are used, a switchover can be easily made between two different bands.

Since the wireless communication module 100 uses a frequency band around 2.4 GHz as the first frequency band and a frequency band around 5 GHz as the second frequency band, the wireless communication module 100 is applicable to a wireless LAN communication unit.

Since the wireless communication module 200 in the present invention uses the characteristics of the filter 10 by which a difference is made between the amount of electric power attenuation in the first frequency band and the amount of electric power attenuation in the second frequency band, a structure to make a difference in the amount of electric power attenuation can be easily implemented and an increase in costs can thereby be suppressed to a small value.

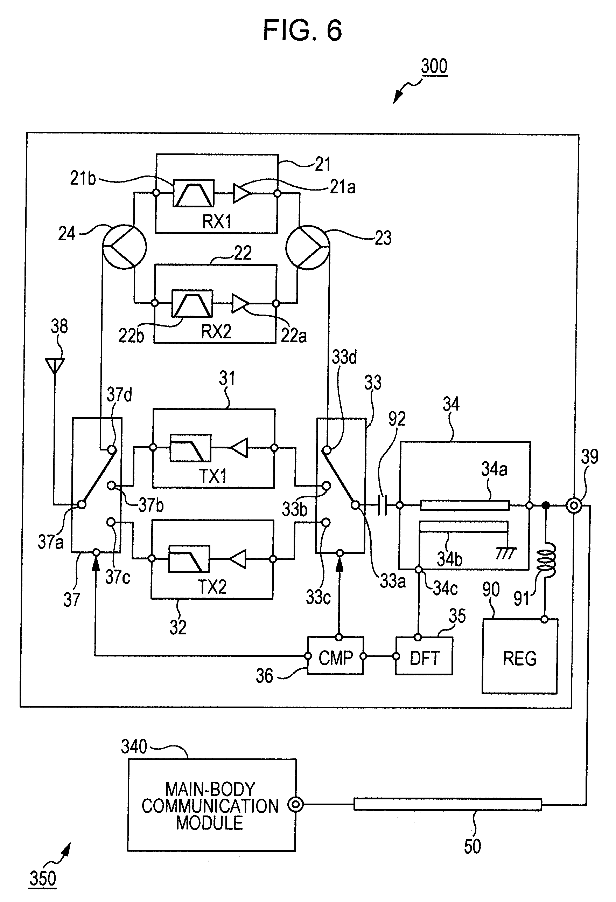

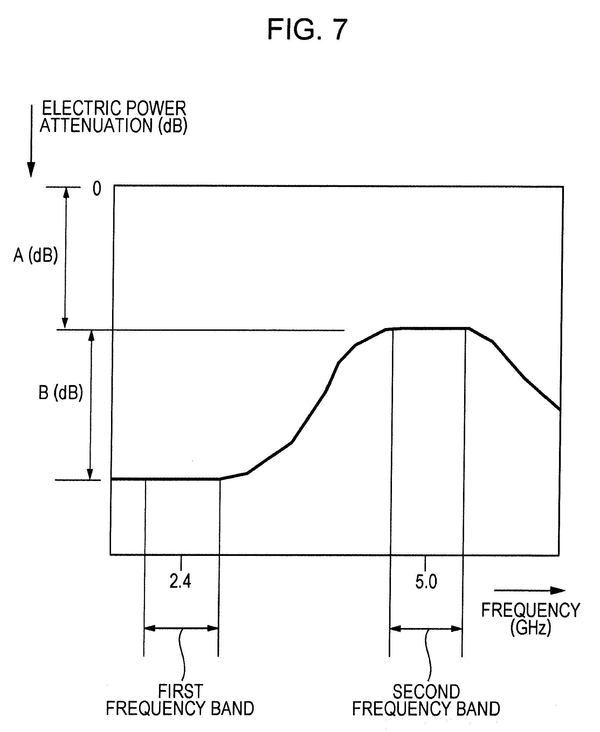

Next, a wireless communication module 300 in a second embodiment will be described with reference to Figs. 6 and 7. Fig. 6 is a block diagram illustrating the structure of the wireless communication module 300 according to the second embodiment. Fig. 7 is a frequency characteristic diagram of a coupling path 34b in a directional coupling circuit 34. The wireless communication module 300 largely differs from the wireless communication module 100 only in portions related to reception circuits; other structures in the wireless communication module 300 are the same as in the wireless communication module 100. Therefore, explanation of the other structures may be omitted.

As illustrated in Fig. 6, a vehicle-mounted wireless communication unit 350 includes a main-body communication module 340 mounted in, for example, the console box of a vehicle, the wireless communication module 300, and a signal transfer cable 50 that mutually connects the main-body communication module 340 and wireless communication module 300. The vehicle-mounted wireless communication unit 350 is a dual band wireless LAN communication unit that transmits and receives signals in the 2.4-GHz band and 5-GHz band. The wireless communication module 300 is formed as part of the vehicle-mounted wireless communication unit 350.

As illustrated in Fig. 6, the wireless communication module 300 includes a transmission and reception block, which includes two transmission circuits and two reception circuits, a radio-frequency terminal 39, and a power supply voltage regulator 90. The transmission and reception block includes a first transmission circuit 31, a second transmission circuit 32, a first switch circuit 33, a directional coupling circuit 34, a power detecting circuit 35, a voltage comparison circuit 36, a second switch circuit 37, an antenna 38, a first reception circuit 21, a second reception circuit 22, a coupler 23, and a distributor 24. The structures of the radio-frequency terminal 39, power supply voltage regulator 90, inductor 91, and capacitor 92 are the same as in the wireless communication module 100.

As illustrated in Fig. 6, the input port of the directional coupling circuit 34 is connected to the radio-frequency terminal 39. A transmission signal from the main-body communication module 340 is entered to the directional coupling circuit 34. The magnitude of the electric power of a transmission signal at the input port of the directional coupling circuit 34 is constant regardless of the frequency of the transmission signal.

The first switch circuit 33 has a common terminal 33a, a first connection terminal 33b, a second connection terminal 33c, and a third connection terminal 33d. The second switch circuit 37 has an antenna-use common terminal 37a, an antenna-use first connection terminal 37b, an antenna-use second connection terminal 37c, and an antenna-use third connection terminal 37d. The common terminal 33a of the first switch circuit 33 is connected to the output port of a signal transfer path 34a in the directional coupling circuit 34. The input port of the first transmission circuit 31 is connected to the first connection terminal 33b of the first switch circuit 33. The input port of the second transmission circuit 32 is connected to the second connection terminal 33c of the first switch circuit 33. The output port of the first transmission circuit 31 is connected to the antenna-use first connection terminal 37b of the second switch circuit 37. The output port of the second transmission circuit 32 is connected to the antenna-use second connection terminal 37c of the second switch circuit 37.

As with the wireless communication module 100, the first transmission circuit 31 is structured so as to transmit signals in a prescribed first frequency band, and the second transmission circuit 32 is structured so as to transmit signals in a prescribed second frequency band, which differs from the prescribed first frequency band. The antenna 38 is connected to the antenna-use common terminal 37a of the second switch circuit 37. The antenna 38 operates an antenna for transmission.

The first reception circuit 21 is structured so as to receive signals in the prescribed first frequency band in which the first transmission circuit 31 transmits signals, and the second reception circuit 22 is structured so as to receive signals in the prescribed second frequency band in which the second transmission circuit 32 transmits signals. In the first reception circuit 21, a first low-noise power amplifier 21a and a first band-pass filter 21b are connected in series between the input port and output port of the first reception circuit 21. Similarly, in the second reception circuit 22, a second low-noise power amplifier 22a and a second band-pass filter 22b are connected in series between the input port and output port of the second reception circuit 22.

The first low-noise power amplifier 21a and second low-noise power amplifier 22a each amplify an entered reception signal to a prescribed level and outputs the amplified signal. The first band-pass filter 21b and second band-pass filter 22b are provided to suppress unnecessary signals included in the entered reception signal.

The distributor 24 distributes a signal received at the antenna 38 to the first reception circuit 21 and second reception circuit 22. The coupler 23 combines a signal filtered and then amplified in the first reception circuit 21 and a signal filtered and then amplified in the second reception circuit 22 together and outputs a resulting combined signal to the first switch circuit 33. The input ports of the first reception circuit 21 and second reception circuit 22 are connected to the two output terminals of the distributor 24. The output ports of the first reception circuit 21 and second reception circuit 22 are connected to the two input terminals of the coupler 23. The output port of the coupler 23 is connected to the third connection terminal 33d of the first switch circuit 33. The input port of the distributor 24 is connected to the antenna-use third connection terminal 37d of the second switch circuit 37.

The input port of the directional coupling circuit 34 is connected to the radio-frequency terminal 39. A transmission signal from the main-body communication module 340 is entered to the directional coupling circuit 34. In the directional coupling circuit 34, a signal eligible for being transferred is transferred through the signal transfer path 34a and is combined in the coupling path 34b to attenuate the signal by a prescribed amount of electric power, after which the attenuated signal can be retrieved from a coupling output port 34c. When the electric power of the transmission signal retrieved from the coupling output port 34c is measured, therefore, the magnitude of the electric power entered to the directional coupling circuit 34 can be known. Since the power detecting circuit 35 is connected to the coupling output port 34c, the electric power of the transmission signal can be measured by the power detecting circuit 35.

The frequency characteristics, illustrated in Fig. 7, of electric power attenuation in a path from the input port or output port of the directional coupling circuit 34 used in the wireless communication module 300 to the coupling output port 34c are the same as the frequency characteristics, illustrated in Fig. 2, of the directional coupling circuit 4 used in the wireless communication module 100. Fig. 7 indicates that in the directional coupling circuit 34, the amount of electric power attenuation in the second frequency band, that is, around 5 GHz, is A (dB). In the directional coupling circuit 34, the amount of electric power attenuation around 2.4 GHz in the path from the input port or output port to the coupling output port 34c is set so as to be B (dB) larger than the amount of electric power attenuation around 5 GHz. As described above, the magnitude of the electric power of a transmission signal at the input port of the directional coupling circuit 34 is constant regardless of the frequency of the transmission signal. At the coupling output port 34c, therefore, a difference of B (dB) occurs in the magnitude of electric power between a transmission signal at 2.4 GHz and a transmission signal at 5 GHz. When the magnitude of the electric power of a transmission signal at the coupling output port 34c is measured as in the wireless communication module 100, therefore, it is possible to determine whether the frequency of the transmission signal entered to the input port of the directional coupling circuit 34 is 2.4 GHz or 5 GHz.

The input port of the directional coupling circuit 34 is an output port for a reception signal, and the output port of the signal transfer path 34a in the directional coupling circuit 34 is an input port for a reception signal. As with a transmission signal, the electric power of which can be measured by the power detecting circuit 35, the electric power of a reception signal can be measured by the power detecting circuit 35. In general, a difference between the transmission electric power of a transmission signal and the reception electric power of a reception signal is extremely large. Usually, the electric power of a transmission signal is +15 to +20 (dBm), and the electric power of a reception signal is -60 to -30 (dBm); the difference is at least 45 (dB). Therefore, it is possible to clearly determine whether the signal is a transmission signal or a reception signal, according to the signal's electric power measured by the power detecting circuit 35.

As illustrated in Fig. 6, the input port of the voltage comparison circuit 36 is connected to the output port of the power detecting circuit 35. A control signal output port of the voltage comparison circuit 36 is connected to the control signal input port of the first switch circuit 33, and another control signal output port of the voltage comparison circuit 36 is connected to the control signal input port of the second switch circuit 37. The power detecting circuit 35 is structured so as to output a voltage equivalent to the magnitude of detected electric power. The voltage comparison circuit 36 receives an output voltage from the power detecting circuit 35, compares the output voltage with a prescribed voltage value, which is a threshold, and outputs a control signal according to the comparison result. The same control signal is entered to the control signal input port of the first switch circuit 33 and the control signal input port of the second switch circuit 37 at the same time. Therefore, a switchover to the antenna-use first connection terminal 37b, antenna-use second connection terminal 37c, and antenna-use third connection terminal 37d of the second switch circuit 37 is respectively made in synchronization with a switchover to the first connection terminal 33b, second connection terminal 33c, and third connection terminal 33d of the first switch circuit 33.

As with the power detecting circuit 5, the power detecting circuit 35 is structured so as to output a voltage equivalent to the magnitude of detected electric power. The voltage comparison circuit 36 receives an output voltage from the power detecting circuit 35, compares the output voltage with a prescribed voltage value, which is a threshold, and outputs a control signal according to the comparison result. Here, a first threshold voltage V1 equivalent to prescribed first electric power P1 (dBm) and a second threshold voltage V2 equivalent to prescribed second electric power P2 (dBm) are set in the voltage comparison circuit 36, the second electric power P2 (dBm) being lower than the first electric power P1 (dBm). The first threshold voltage V1 is a voltage according to which it is determined whether the transmission signal is a signal within the first frequency band or in the second frequency band. The second threshold voltage V2 is s a voltage according to which it is determined whether the measured signal is a transmission signal or a reception signal.

When the voltage output from the power detecting circuit 35 is lower than the first threshold voltage V1 but equal to or higher than the second threshold voltage V2, the first switch circuit 33 is switched to the first connection terminal 33b, in which case a transmission signal is selected and a signal in the first frequency band is selected. When the voltage output from the power detecting circuit 35 is equal to or higher than the first threshold voltage V1, the first switch circuit 33 is switched to the second connection terminal 33c, in which case a transmission signal is selected and a signal in the second frequency band is selected. When the voltage output from the power detecting circuit 35 is lower than the second threshold voltage V2, the first switch circuit 33 is switched to the third connection terminal 33d, in which case a reception signal is selected. A switchover of the second switch circuit 37 is made in synchronization with a switchover of the first switch circuit 33. If neither transmission nor reception is being performed, the voltage output from the power detecting circuit 35 is of course lower than the second threshold voltage V2. Therefore, if neither transmission nor reception is being performed, the first switch circuit 33 is switched to the third connection terminal 33d and the second switch circuit 37 is switched to the antenna-use third connection terminal 37d, as in reception.

Specifically, the magnitude of the electric power of a transmission signal at the input port of the directional coupling circuit 34 is set to P0 (dBm), the magnitude being constant regardless of the frequency of the transmission signal. As described above, the amount of electric power attenuation around 5 GHz in the directional coupling circuit 34 is A (dB) and the amount of electric power attenuation around 2.4 GHz is set so as to be B (dB) larger than the amount of electric power attenuation around 5 GHz. Thus, the prescribed first electric power P1 (dBm) is set to (P0 - A - B/2), which is an intermediate value between electric power at 5 GHz and electric power at 2.4 GHz, in the voltage comparison circuit 36. That is, P1 equals (P0 - A - B/2). Accordingly, it suffices to set the first threshold voltage V1 to a voltage equivalent to the first electric power P1 (= (P0 - A - B/2)). If B is set to, for example, 10 (dB), the second electric power P2 of the reception signal must be at least 40 (dB) lower than the first electric power P1. Accordingly, it suffices to set the second threshold voltage V2 to a voltage equivalent to electric power that is, for example, 10 (dB) lower than the first electric power P1 (= (P0 - A - B/2) ).

As described above, the wireless communication module 300 has been structured so that in a case as well in which the first reception circuit 21 and second reception circuit 22 are provided, the first switch circuit 33 is switched to the same side as the first transmission circuit 31 or the same side as the second transmission circuit 32 according to the magnitude of electric power detected by the power detecting circuit 35. Furthermore, a switchover between transmission and reception is also made according to the magnitude of electric power detected by the power detecting circuit 35. Therefore, these two types of switching can be carried out by only the first switch circuit 33.

The wireless communication module 300 uses two threshold voltages, first threshold voltage V1 and second threshold voltage V2, to switch the first switch circuit 33, so it is possible to easily make a switchover between two different frequency bands during transmission and a switchover between transmission and reception.

As described above, with the wireless communication module in the present invention, a difference is made in the amount of electric power attenuation in the path from the input port of the directional coupling circuit to the input port of the power detecting circuit between the first frequency band and the second frequency band so that the first switch circuit is switched to the same side as the first transmission circuit or the same side as the second transmission circuit according to the magnitude of electric power detected by the power detecting circuit. This eliminates the need to transmit, from the main-body communication module, a control signal used for band switching, enabling a switchover to be made between two different frequency bands with a simple structure.

The present invention is not limited to the above embodiments; the present invention can be appropriately modified and practiced in a form in which effects of the present invention are obtained. For the wireless communication module 100, wireless communication module 200, and wireless communication module 300, for example, the amount of electric power attenuation at 2.4 GHz has been set so as to be larger than at 5 GHz. However, the amount of electric power attenuation at 5 GHz may be set so as to be larger than at 2.4 GHz, and requirements for constituent elements may be changed accordingly.

## Claims

1. A wireless communication module (100) that is connected to a main-body communication module (40) through a signal transfer cable (50), the wireless communication module (100) comprising:
a radio-frequency terminal (9) to which the signal transfer cable (50) is connected, a transmission signal being entered to the radio-frequency terminal (9);
a directional coupling circuit (4), an input port of which is connected to the radio-frequency terminal (9);
a first switch circuit (3) that has a common terminal (3a), a first connection terminal (3b), and a second connection terminal (3c), the common terminal (3a) being connected to an output port of a signal transfer path (4a) in the directional coupling circuit (4);
a first transmission circuit (1) connected to the first connection terminal (3b);
a second transmission circuit (2) connected to the second connection terminal (3c); and
a power detecting circuit (5) connected to a coupling output port (4c) of the directional coupling circuit (4), wherein
the first transmission circuit (1) is configured to transmit a signal in a prescribed first frequency band, and the second transmission circuit (2) is configured to transmit a signal in a second frequency band, which differs from the prescribed first frequency band,
a magnitude of electric power of the transmission signal at the input port of the directional coupling circuit (4) is constant regardless of a frequency of the transmission signal, and a difference is made in an amount of electric power attenuation in the path from the input port of the directional coupling circuit (4) to the input port of the power detecting circuit (5) between the first frequency band and the second frequency band, and
the first switch circuit (3) is configured to be switched to the first connection terminal (3b) or the second connection terminal (3c) according to a magnitude of electric power detected by the power detecting circuit (5).

2. The wireless communication module according to Claim 1, wherein:
the power detecting circuit (5) is configured to output a voltage equivalent to the magnitude of the detected electric power;
a voltage comparison circuit (6) is connected between the power detecting circuit (5) and a control signal input port of the first switch circuit (3), the voltage comparison circuit (6) having a set first threshold voltage equivalent to prescribed first electric power ;
when a voltage output from the power detecting circuit (5) is lower than the first threshold voltage, the first switch circuit (3) is configured to be switched to the first connection terminal (3b); and
when the voltage output from the power detecting circuit (5) is equal to or higher than the first threshold voltage, the first switch circuit (3) is configured to be switched to the second connection terminal (3c).

3. The wireless communication module according to Claim 1 or 2, further comprising a filter (10) that is connected between the coupling output port (4c) of the directional coupling circuit (4) and the input port of the power detecting circuit (5), wherein
characteristics of the filter (10) are used to make a difference in an amount of electric power attenuation between the first frequency band and the second frequency band.

4. The wireless communication module according to one of Claims 1-3, further comprising:
a first reception circuit (21) that is configured to receive a signal in the first frequency band,
a second reception circuit (22) that is configured to receive a signal in the second frequency band; and
a coupler (23) having two input ports; wherein
an output port of the first reception circuit (21) and an output port of the second reception circuit (22) are connected to two input ports of the coupler (23),
the first switch circuit (3) further has a third connection terminal (33d), the third connection terminal (33d) being connected to an output port of the coupler (23), and
the first switch circuit (3) is configured to be switched to the first connection terminal (3b), the second connection terminal (3c), or the third connection terminal (33d) according to the magnitude of the electric power detected by the power detecting circuit (5).

5. The wireless communication module according to Claim 4, wherein:
the power detecting circuit (5) is configured to output a voltage equivalent to the magnitude of the detected electric power;
a voltage comparison circuit (36) is connected between the power detecting circuit (5) and the control signal input port of the first switch circuit (3);
the voltage comparison circuit (36) having a set first threshold voltage equivalent to prescribed first electric power and second threshold voltage equivalent to prescribed second electric power , the prescribed second threshold voltage being lower than the prescribed first threshold voltage;
when a voltage output from the power detecting circuit (5) is lower than the first threshold voltage but equal to or higher than the second threshold voltage, the first switch circuit (3) is configured to be switched to the first connection terminal (3b);
when the voltage output from the power detecting circuit (5) is equal to or higher than the first threshold voltage, the first switch circuit (3) is configured to be switched to the second connection terminal (3c); and
when the voltage output from the power detecting circuit (5) is lower than the second threshold voltage, the first switch circuit (3) is configured to be switched to the third connection terminal (33d).

6. The wireless communication module according to any one of Claims 1 to 5, further comprising:
an antenna (8); and
a second switch circuit (7) that has an antenna-use first connection terminal (7b), an antenna-use second connection terminal (7c), and an antenna-use common terminal (7a) that is connected to the antenna (8), wherein
the antenna-use first connection terminal (7b) is connected to an output port of the first transmission circuit (1), and the antenna-use second connection terminal (7c) is connected to an output port of the second transmission circuit (2), and
a switchover to the antenna-use first connection terminal (7b) is made in synchronization with a switchover to the first connection terminal (3b) of the first switch circuit (3), and a switchover to the antenna-use second connection terminal (7c) is made in synchronization with a switchover to the second connection terminal (3c) of the first switch circuit (3).

7. The wireless communication module according to any one of Claims 1 to 6, wherein:
the first frequency band is a frequency band around 2.4 GHz; and
the second frequency band is a frequency band around 5 GHz.

## Patentansprüche

1. Drahtlos-Kommunikationsmodul (100), das mit einem Hauptkörper-Kommunikationsmodul (40) über ein Signalübertragungskabel (50) verbunden ist, wobei das Drahtlos-Kommunikationsmodul (100) Folgendes aufweist:
einen Hochfrequenzanschluss (9), mit dem das Signalübertragungskabel (50) verbunden ist, wobei ein Übertragungssignal an dem Hochfrequenzanschluss (9) zugeführt wird;
eine direktionale Kopplungsschaltung (4), die mit einem Eingangsanschluss mit dem Hochfrequenzanschluss (9) verbunden ist;
einen ersten Schaltkreis (3), der einen gemeinsamen Anschluss (3a), einen ersten Verbindungsanschluss (3b) und einen zweiten Verbindungsanschluss (3c) aufweist, wobei der gemeinsame Anschluss (3a) mit einem Ausgangsanschluss eines Signalübertragungsweges (4a) in der direktionalen Kopplungsschaltung (4) verbunden ist;
eine erste Sendeschaltung (1), die mit dem ersten Verbindungsanschluss (3b) verbunden ist;
eine zweite Sendeschaltung (2), die mit dem zweiten Verbindungsanschluss (3c) verbunden ist; und
eine Leistungserfassungsschaltung (5), die mit einem Kopplungsausgangsanschluss (4c) der direktionalen Kopplungsschaltung (4) verbunden ist,
wobei die erste Sendeschaltung (1) dazu ausgebildet ist, ein Signal in einem vorbestimmten ersten Frequenzband zu übertragen, und die zweite Sendeschaltung (2) dazu ausgebildet ist, ein Signal in einem zweiten Frequenzband zu übertragen, das sich von dem vorbestimmten ersten Frequenzband unterscheidet,
wobei eine Größe der elektrischen Leistung des Übertragungssignals an dem Eingangsanschluss der direktionalen Kopplungsschaltung (4) unabhängig von einer Frequenz des Übertragungssignals konstant ist und eine Differenz gebildet wird hinsichtlich eines Betrags der elektrischen Leistungsdämpfung auf dem Weg von dem Eingangsanschluss der direktionalen Kopplungsschaltung (4) zu dem Eingangsanschluss der Leistungserfassungsschaltung (5) zwischen dem ersten Frequenzband und dem zweiten Frequenzband, und
wobei der erste Schaltkreis (3) dazu ausgebildet ist, in Abhängigkeit von einer Größe der von der Leistungserfassungsschaltung (5) detektierten elektrischen Leistung auf den ersten Verbindungsanschluss (3b) oder den zweiten Verbindungsanschluss (3c) geschaltet zu werden.

2. Drahtlos-Kommunikationsmodul nach Anspruch 1, wobei:
die Leistungserfassungsschaltung (5) dazu ausgebildet ist, eine Spannung äquivalent zu der Größe der detektierten elektrischen Leistung abzugeben;
eine Spannungsvergleichsschaltung (6) zwischen die Leistungserfassungsschaltung (5) und einen Steuersignaleingangsanschluss (3) des ersten Schaltkreises (3) geschaltet ist, wobei die Spannungsvergleichsschaltung (6) eine vorgegebene erste Schwellenspannung äquivalent zu der vorbestimmten ersten elektrischen Leistung aufweist;
wenn ein Spannungsausgang von der Leistungserfassungsschaltung (5) niedriger als die erste Schwellenspannung ist, der erste Schaltkreis (3) dazu ausgebildet ist, auf den ersten Verbindungsanschluss (3b) geschaltet zu werden; und
wenn der Spannungsausgang von der Leistungserfassungsschaltung (5) gleich oder höher als die erste Schwellenspannung ist, der erste Schaltkreis (3) dazu ausgebildet ist, auf den zweiten Verbindungsanschluss (3c) geschaltet zu werden.

3. Drahtlos-Kommunikationsmodul nach Anspruch 1 oder 2,
das weiterhin ein Filter (10) aufweist, das zwischen den Kopplungsausgangsanschluss (4c) der direktionalen Kopplungsschaltung (4) und den Eingangsanschluss der Leistungserfassungsschaltung (5) geschaltet ist, wobei Eigenschaften des Filters (10) dazu verwendet werden, eine Differenz hinsichtlich eines Betrags der elektrischen Leistungsdämpfung zwischen dem ersten Frequenzband und dem zweiten Frequenzband zu bilden.

4. Drahtlos-Kommunikationsmodul nach einem der Ansprüche 1 bis 3, weiterhin aufweisend:
eine erste Empfangsschaltung (21), die dazu ausgebildet ist, ein Signal in dem ersten Frequenzband zu empfangen,
eine zweite Empfangsschaltung (22), die dazu ausgebildet ist, ein Signal in dem zweiten Frequenzband zu empfangen; und
einen Koppler (23) mit zwei Eingangsanschlüssen;
wobei ein Ausgangsanschluss der ersten Empfangsschaltung (21) und ein Ausgangsanschluss der zweiten Empfangsschaltung (22) mit zwei Eingangsanschlüssen des Kopplers (23) verbunden sind,
wobei der erste Schaltkreis (3) ferner einen dritten Verbindungsanschluss (33d) aufweist, wobei der dritte Verbindungsanschluss (33d) mit einem Ausgangsanschluss des Kopplers (23) verbunden ist, und
wobei der erste Schaltkreis (3) dazu ausgebildet ist, in Abhängigkeit von der Größe der von der Leistungserfassungsschaltung (5) detektierten elektrischen Leistung auf den ersten Verbindungsanschluss (3b), den zweiten Verbindungsanschluss (3c) oder den dritten Verbindungsanschluss (33d) geschaltet zu werden.

5. Drahtlos-Kommunikationsmodul nach Anspruch 4, wobei:
die Leistungserfassungsschaltung (5) dazu ausgebildet ist, eine Spannung äquivalent zu der Größe der detektierten elektrischen Leistung abzugeben;
eine Spannungsvergleichsschaltung (36) zwischen die Leistungserfassungsschaltung (5) und den Steuersignaleingangsanschluss des ersten Schaltkreises (3) geschaltet ist;
die Spannungsvergleichsschaltung (36) eine vorgegebene erste Schwellenspannung äquivalent zu der vorbestimmten ersten elektrischen Leistung und eine zweite Schwellenspannung äquivalent zu der vorbestimmten zweiten elektrischen Leistung aufweist, wobei die vorbestimmte zweite Schwellenspannung niedriger ist als die vorbestimmte erste Schwellenspannung;
wenn eine von der Leistungserfassungsschaltung (5) abgegebene Spannung niedriger ist als die erste Schwellenspannung, jedoch gleich oder höher ist als die zweite Schwellenspannung, der erste Schaltkreis (3) dazu ausgebildet ist, auf den ersten Verbindungsanschluss (3b) geschaltet zu werden;
wenn die von Leistungserfassungsschaltung (5) abgegebene Spannung gleich oder höher ist als die erste Schwellenspannung, der erste Schaltkreis (3) dazu ausgebildet ist, auf den zweiten Verbindungsanschluss (3c) geschaltet zu werden; und
wenn die von der Leistungserfassungsschaltung (5) abgegebene Spannung niedriger ist als die zweite Schwellenspannung, der erste Schaltkreis (3) dazu ausgebildet ist, auf den dritten Verbindungsanschluss (33d) geschaltet zu werden.

6. Drahtlos-Kommunikationsmodul nach einem der Ansprüche 1 bis 5, weiterhin aufweisend:
eine Antenne (8); und
einen zweiten Schaltkreis (7), der einen ersten Verbindungsanschluss (7b) zur Antennennutzung, einen zweiten Verbindungsanschluss (7c) zur Antennennutzung sowie einen gemeinsamen Anschluss (7a) zur Antennennutzung aufweist, der mit der Antenne (8) verbunden ist, wobei der erste Verbindungsanschluss (7b) zur Antennennutzung mit einem Ausgangsanschluss der ersten Sendeschaltung (1) verbunden ist und der zweite Verbindungsanschluss (7c) zur Antennennutzung mit einem Ausgangsanschluss der zweiten Sendeschaltung (2) verbunden ist, und
ein Umschalten auf den ersten Verbindungsanschluss (7b) zur Antennennutzung in Synchronisation mit einem Umschalten auf den ersten Verbindungsanschluss (3b) des ersten Schaltkreises (3) stattfindet, und ein Umschalten auf den zweiten Verbindungsanschluss (7c) zur Antennennutzung in Synchronisation mit einem Umschalten auf den zweiten Verbindungsanschluss (3c) des ersten Schaltkreises (3) stattfindet.

7. Drahtlos-Kommunikationsmodul nach einem der Ansprüche 1 bis 6, wobei:
das erste Frequenzband ein Frequenzband um 2,4 GHz ist; und
das zweite Frequenzband ein Frequenzband um 5 GHz ist.

## Revendications

1. Module de communication sans fil (100) qui est connecté à un module de communication principal (40) par un câble de transfert de signal (50), le module de communication sans fil (100) comprenant :
une borne radiofréquence (9) auquel le câble de transfert de signal (50) est connecté, un signal de transmission étant entré sur la borne radiofréquence (9) ;
un circuit de couplage directionnel (4), dont un port d'entrée est connecté à la borne radiofréquence (9) ;
un premier circuit de commutation (3) qui comporte une borne commune (3a), une première borne de connexion (3b), et une seconde borne de connexion (3c), la borne commune (3a) étant connectée à un port de sortie d'un chemin de transfert de signal (4a) dans le circuit de couplage directionnel (4) ;
un premier circuit de transmission (1) connecté à la première borne de connexion (3b) ;
un second circuit de transmission (2) connecté à la seconde borne de connexion (3c) ; et
un circuit de détection de courant (5) connecté à un port de sortie de couplage (4c) du circuit de couplage directionnel (4), dans lequel
le premier circuit de transmission (1) est configuré pour transmettre un signal dans une première bande de fréquence prescrite, et le second circuit de transmission (2) est configuré pour transmettre un signal dans une seconde bande de fréquence, qui diffère de la première bande de fréquence prescrite,
une amplitude de courant électrique du signal de transmission au niveau du port d'entrée du circuit de couplage directionnel (4) est constante quelle que soit une fréquence du signal de transmission, et une différence est faite dans une quantité d'atténuation de courant électrique dans le chemin depuis le port d'entrée du circuit de couplage directionnel (4) vers le port d'entrée du circuit de détection de courant (5) entre la première bande de fréquence et la seconde bande de fréquence, et
le premier circuit de commutation (3) est configuré pour être commuté vers la première borne de connexion (3b) ou la seconde borne de connexion (3c) selon une amplitude du courant électrique détectée par le circuit de détection de courant (5).

2. Module de communication sans fil selon la revendication 1, dans lequel :
le circuit de détection de courant (5) est configuré pour sortir une tension équivalente à l'amplitude du courant électrique détecté ;
un circuit de comparaison de tension (6) est connecté entre le circuit de détection de courant (5) et un port d'entrée de signal de commande du premier circuit de commutation (3), le circuit de comparaison de tension (6) ayant une première tension de seuil établie équivalente au premier courant électrique prescrit ;
quand une tension sortie du circuit de détection de puissance (5) est inférieure à la première tension de seuil, le premier circuit de commutation (3) est configuré pour être commuté vers la première borne de connexion (3b) ; et
quand la tension sortie du circuit de détection de courant (5) est supérieure ou égale à la première tension de seuil, le premier circuit de commutation (3) est configuré pour être commuté vers la seconde borne de connexion (3c).

3. Module de communication sans fil selon la revendication 1 ou 2, comprenant en outre un filtre (10) qui est connecté entre le port de sortie de couplage (4c) du circuit de couplage directionnel (4) et le port d'entrée du circuit de détection de courant (5), dans lequel
des caractéristiques du filtre (10) sont utilisées pour faire une différence dans une quantité d'atténuation de courant électrique entre la première bande de fréquence et la seconde bande de fréquence.

4. Module de communication sans fil selon l'une quelconque des revendications 1-3, comprenant en outre :
un premier circuit de réception (21) qui est configuré pour recevoir un signal dans la première bande de fréquence,
un second circuit de réception (22) qui est configuré pour recevoir un signal dans la seconde bande de fréquence ; et
un coupleur (23) ayant deux ports d'entrée ; dans lequel
un port de sortie du premier circuit de réception (21) et un port de sortie du second circuit de réception (22) sont connectés aux deux ports d'entrée du coupleur (23),
le premier circuit de commutation (3) comprend en outre une troisième borne de connexion (33d), la troisième borne de connexion (33d) étant connectée à un port de sortie du coupleur (23), et
le premier circuit de commutation (3) est configuré pour être commuté vers la première borne de connexion (3b), la seconde borne de connexion (3c) ou la troisième borne de connexion (33d) selon l'amplitude du courant électrique détecté par le circuit de détection de courant (5).

5. Module de communication sans fil selon la revendication 4, dans lequel :
le circuit de détection de courant (5) est configuré pour sortir une tension équivalente à l'amplitude du courant électrique détecté ;
un circuit de comparaison de tension (36) est connecté entre le circuit de détection de courant (5) et le port d'entrée de signal de commande du premier circuit de commutation (3) ;
le circuit de comparaison de tension (36) ayant une première tension de seuil établie équivalente au premier courant électrique prescrit et une seconde tension de seuil équivalente au second courant électrique prescrit, la seconde tension de seuil prescrite étant inférieure à la première tension de seuil prescrite ;
quand une tension sortie du circuit de détection de courant (5) est inférieure à la première tension de seuil mais supérieure ou égale à la seconde tension de seuil, le premier circuit de commutation (3) est configuré pour être commuté vers la première borne de connexion (3b) ;
quand la tension sortie du circuit de détection de courant (5) est supérieure ou égale à la première tension de seuil, le premier circuit de commutation (3) est configuré pour être commuté vers la seconde borne de connexion (3c) ;
quand la tension sortie du circuit de détection de courant (5) est inférieure à la seconde tension de seuil, le premier circuit de commutation (3) est configuré pour être commuté vers la troisième borne de connexion (33d).

6. Module de communication sans fil selon l'une quelconque des revendications 1 à 5, comprenant en outre :
une antenne (8) ; et
un second circuit de commutation (7) qui a une première borne de connexion utilisée pour l'antenne (7b), une seconde borne de connexion utilisée pour l'antenne (7c), et une borne commune utilisée pour l'antenne (7a) qui est connectée à l'antenne (8), dans lequel
la première borne de connexion utilisée pour l'antenne (7b) est connectée à un port de sortie du premier circuit de transmission (1), et la seconde borne de connexion utilisée pour l'antenne (7c) est connectée à un port de sortie du second circuit de transmission (2), et
une commutation vers la première borne de connexion utilisée pour l'antenne (7b) est faite en synchronisation avec une commutation vers la première borne de connexion (3b) du premier circuit de commutation (3), et une commutation vers la seconde borne de connexion utilisée pour l'antenne (7c) est faite en synchronisation avec une commutation vers la seconde borne de connexion (3c) du premier circuit de commutation (3).

7. Module de communication sans fil selon l'une quelconque des revendications 1 à 6, dans lequel :
la première bande de fréquence est une bande de fréquence autour de 2,4 GHz ; et
la seconde bande de fréquence est une bande de fréquence autour de 5 GHz.
